# EUROPEAN PATENT SPECIFICATION

(11) **EP 4 269 127 B1**
(45) Date of publication and mention of the grant of the patent: **17.06.2026**
(21) Application number: 23170020.4
(22) Date of filing: 26.04.2023
(51) Int. Cl.: B60B 3/00, B60B 3/10, B60B 3/04

(54) **WHEEL FOR VEHICLES WITH MULTIPLE INCLINATION SPOKE WEBS**
RAD FÜR FAHRZEUGE MIT SPEICHENSTEGEN MIT MEHREREN NEIGUNGEN
ROUE POUR VÉHICULES AVEC DES RAYONS À INCLINAISON MULTIPLE

(30) Priority: 27.04.2022 IT 202200008240
(43) Date of publication of application: 01.11.2023
(73) Proprietor: MW Italia S.r.l., 10098 Rivoli (TO) (IT)
(72) Inventor: PERRIS MAGNETTO, Gabriele, I-10098 RIVOLI (Torino) (IT); BARTOLI, Paolo, I-19025 PORTOVENERE (La Spezia) (IT); GOTTA, Giacomo, I-10081 CASTELLAMONTE (Torino) (IT); ZANOLLI, Emanuele, I-10144 TORINO (IT); RONCO, Davide, I-14019 VILLANOVA D'ASTI (Asti) (IT); GALLIO, Giorgio, I-10126 TORINO (IT)
(74) Representative: Vanzini, Christian

(56) References cited:
- EP-A1- 2 495 110
- US-A1- 2019 283 492
- US-B2- 8 454 099

## Description

The present invention relates to a wheel for vehicles, comprising
a rim of sheet metal, and
a disc of sheet metal, having a central part adapted to be connected to an axle hub, a plurality of spokes extending from the central part, each spoke comprising a pair of spoke ribs interconnected by a spoke web, and a peripheral connecting ring extending concentrically with the axis of the wheel and interconnecting the outer ends of said spokes, said connecting ring being fixed to a radially inner surface of the rim, wherein corresponding apertures of the disc are defined between the connecting ring and pairs of adjacent spokes, the radially outer edge of said apertures being defined by the connecting ring, wherein said spoke ribs and spoke web are comprised between said central part of the disc and said connecting ring.

EP 2495110 A1 and US 2019/283492 A1 disclose spoked wheels in which the spoke web comprises a radially inner portion having a curved contour in radial cross-section and a radially outer portion having a rectilinear contour in radial cross-section. US 8454099 B2 discloses a spoked wheel in which the spoke web comprises a radially inner portion having a curved contour in radial cross-section, an intermediate portion having a rectilinear contour in radial cross-section, and a radially outer portion having a curved contour in radial cross-section.

An object of the present invention is to provide a solution which allows the molding process during the creation of the disc of such a spoked wheel to be facilitated.

This object is achieved according to the invention by a wheel of the type defined at the beginning, wherein
said spoke web comprises a radially inner portion and a radially outer portion having a rectilinear contour in radial cross-section, and an intermediate portion connecting the radially inner portion to the radially outer portion and having, in radial cross-section, a contour formed of a contour formed of a single circular arc and having a concavity facing axially inwards or axially outwards.

A wheel according to this solution concept allows the disc molding process to be facilitated, because the spoke web with multiple inclinations allows for a progressive connection between the spoke web and the peripheral connecting ring, reducing the phenomena of narrowing. Consequently, it is possible to improve the fatigue performance of the wheel as well as the static and dynamic stiffness performance of the wheel, and consequently the handling.

Further features and advantages of the wheel according to the invention will become clearer from the following detailed description of some embodiments of the invention, made with reference to the accompanying drawings, provided purely for illustrative and non-limiting purposes, wherein:
- Fig. 1 is a perspective view of a wheel according to the invention;
- Fig. 2 is an axial sectional view of the wheel of Fig. 1;
- Fig. 3 is an enlarged scale view of a detail of Fig. 2;
- Fig. 4 is a view, similar to that of Fig. 3, of a wheel according to a second embodiment.

**In** the following description, "axial direction" means a direction parallel to the wheel axis. The indications "inner" and "outer", with respect to the axial direction, are referred to the condition of installation of the wheel on the vehicle, where "inner" indicates "towards the vehicle" and "outer" indicates "away from the vehicle". The radial direction is therefore also defined with respect to the wheel axis. The term "radial cross-section" therefore refers to a cross-section taken on a radial plane, i.e. passing through the wheel axis.

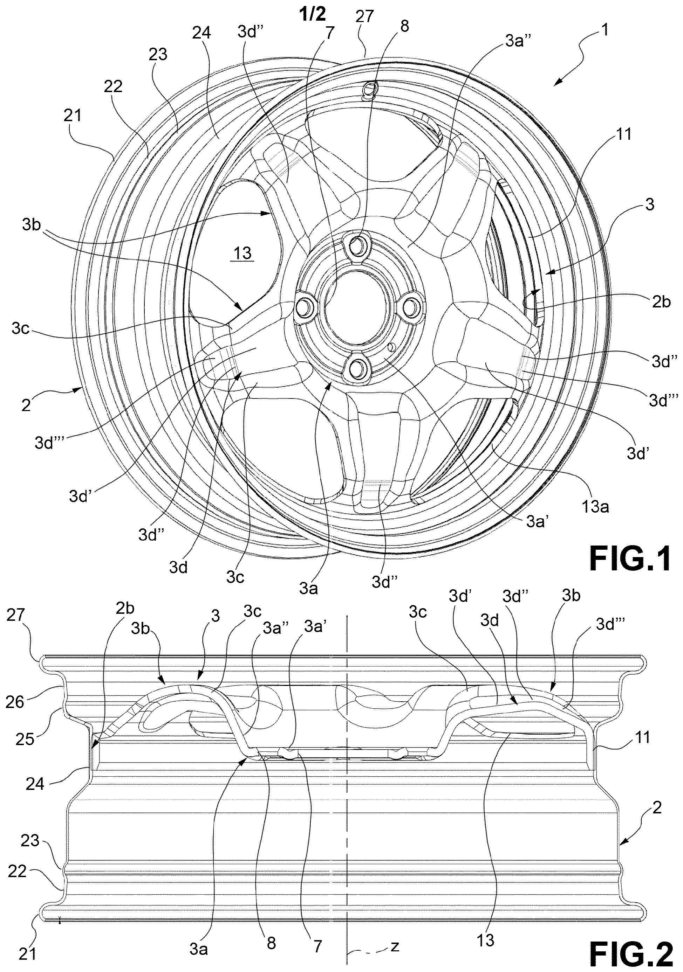

In Fig. 1 and 2, reference numeral 1 indicates as a whole a wheel for vehicles according to the invention. The wheel 1 comprises a rim 2 of sheet metal, e.g., steel or aluminum, and formed, for example, by rolling and welding, and a disc 3 of sheet metal, e.g., steel or aluminum, and formed by stamping and blanking.

The rim 2 conventionally comprises, in succession along the axial direction from the inside to the outside and connected to each other, an inner flange 21, an inner bead seat 22, an inner retaining hump 23, a rim well 24, an outer retaining hump 25, an outer bead seat 26, and an outer flange 27.

The disc 3 has a central part 3a for connection to an axle hub (not shown). In the illustrated embodiment, the central part 3a of the disc 3 essentially comprises a substantially flat mounting portion 3a', and a connecting portion 3a" surrounding the mounting portion 3a'. The mounting portion 3a' has a central opening 7 and, around this, a plurality of holes 8 for the passage of tightening bolts. According to a plan view, this mounting portion 3a' essentially has the shape of a circular crown. The connecting portion 3a" defines a surface of revolution around the axis z of the wheel which has, in cross-section, a curvilinear contour which, starting from the mounting portion 3a', extends axially towards the outside of the wheel 1.

A plurality of angularly spaced spokes 3b extend outwards from the connecting portion 3a" of the central part 3a of the disc 3.

The outer ends of the spokes 3b, at which the spokes 3b have an area curved towards the inside of the wheel, are interconnected by a peripheral connecting ring 11 which extends concentrically with the axis z of the wheel 1.

Corresponding apertures 13 of the disc 3 are defined between the connecting ring 11 and pairs of adjacent spokes 3b, which in the embodiment illustrated by way of example have, according to a plan view, a polygonal shape with rounded vertices.

Each spoke 3b comprises a pair of spoke ribs 3c interconnected by a spoke web 3d. According to a plan view, the spoke ribs 3c are arranged obliquely with respect to the centerline of the relative spokes 3b, and in particular the two spoke ribs 3c of each spoke 3b are arranged so as to approach each other in the centrifugal direction.

Each spoke rib 3c consists of a deformed stiffening part of the relative spoke 3b, protruding in the axial direction, and possibly also in the radial direction (in the peripheral areas of the disc at the curved region of the spoke), with respect to the spoke web 3d adjacent to it. In the circumferential direction, each spoke rib 3c borders on one side with one of the apertures 13, and on the other with the spoke web 3d adjacent to it, and is therefore included between the above.

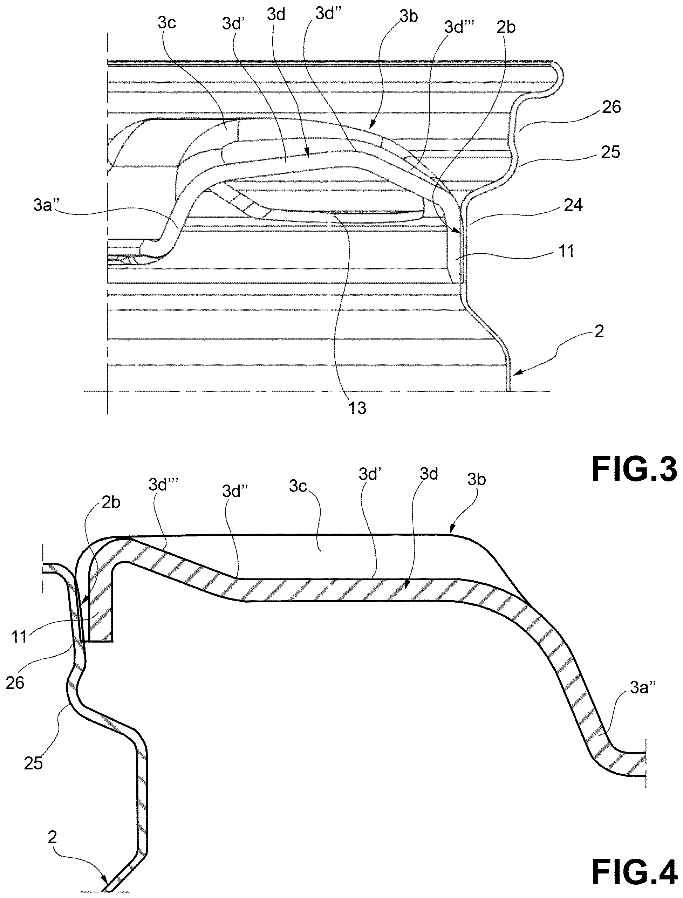

As shown in particular in Fig. 3, each spoke web 3d comprises a radially inner portion 3d' and a radially outer portion 3d‴ having a straight contour in radial cross-section, and an intermediate portion 3d" which connects the radially inner portion 3d' directly to the radially outer portion 3d'''. This intermediate portion 3d" has, in radial cross-section, a contour formed of a single circular arc (therefore defined by a single value of radius of curvature) having a concavity directed axially towards the inside. In practice, the intermediate portion 3d" of the spoke web 3d defines a bend area at which there is a significant variation of the contour inclination of the spoke web. In other words, the spoke web 3d comprises several areas with different inclinations, separated from each other by a transition area (the intermediate portion) having a reduced extension of the radial direction, and at which the inclination from a first inclination value associated with the radially innermost spoke web portion to a second inclination value associated with the radially outermost spoke web portion.

The radially inner portion 3d', the radially outer portion 3d‴ and the intermediate portion 3d‴ extend substantially over the entire width of the spoke web 3d. In other words, in the circumferential direction, these portions completely cover the extension of the spoke web.

The connecting ring 11 of the disc 3 is applied against a radially inner surface 2b of the rim 2, which in the illustrated example is placed at the channel 24. The connecting ring 11 is fixed to this radially inner surface 2b in a manner known per se, for example by welding. The radially outer edge 13a of the apertures 13 is defined by the connecting ring 11.

Each spoke rib 3c, understood as a deformed and protruding part of a spoke 3b, included between an aperture 13 and a spoke web 3d adjacent to it, ends externally at most at the connecting ring 11. The spoke ribs 3c are therefore included between the connecting portion 3a" of the central part 3a of the disc 3 and the connecting ring.

In the peripheral area where the spoke rib 3c ends, the protrusion defined by it disappears and fades into a disc region consisting of a revolution surface portion substantially concentric with the axis z of the wheel.

With reference to Fig. 4, another embodiment of the wheel according to the invention is shown. Corresponding elements have been assigned the same numerical references as in the previous embodiment. The embodiment in question differs from the previous one as regards the axial positioning of the disc with respect to the rim and as regards the configuration of the spoke web, while in relation to the other aspects it is substantially identical to the first one, and therefore for these aspects reference should be made to the previous description. In the embodiment of Fig. 4, similarly to the previous embodiment, each spoke web 3d comprises a radially inner portion 3d' and a radially outer portion 3d‴ having a straight contour in radial cross-section, and an intermediate portion 3d" which connects the radially inner portion 3d' directly to the radially outer portion 3d"'. This intermediate portion 3d" has, in radial cross-section, a contour formed of a circular arc (therefore defined by a single value of radius of curvature) having a concavity directed axially outwards, unlike the previously described embodiment.

The radially inner portion 3d', the radially outer portion 3d‴ and the intermediate portion 3d‴ extend substantially over the entire width of the spoke web 3d.

Differently from the previously described embodiment, the connecting ring 11 of the disc 3 is applied against a radially inner surface 2b of the rim 2, which is placed at the outer bead seat 26.

## Claims

1. A wheel (1) for vehicles, comprising
a rim (2) of sheet metal, and
a disc (3) of sheet metal, having a central part (3a) adapted to be connected to an axle hub, a plurality of spokes (3b) extending from the central part (3a), each spoke (3b) comprising a pair of spoke ribs (3c) interconnected by a spoke web (3d), and a peripheral connecting ring (11) extending concentrically with an axis (z) of the wheel (1) and interconnecting the outer ends of said spokes (3b), said connecting ring (11) being fixed to a radially inner surface (2b) of the rim (2), wherein apertures (13) of the disc (3) are defined between the connecting ring (11) and respective pairs of adjacent spokes (3b), a radially outer edge (13a) of said apertures being defined by the connecting ring (11), wherein said spoke ribs (3c) and spoke web (3d) are comprised between said central part (3a) of the disc (3) and said connecting ring (11),
said wheel being **characterized in that** said spoke web (3d) comprises a radially inner portion (3d') and a radially outer portion (3d‴) having a rectilinear contour in radial cross-section, and an intermediate portion (3d'') connecting the radially inner portion (3d') to the radially outer portion (3d‴) and having, in radial cross-section, a contour formed of a single circular arc and having a concavity facing axially inwards or axially outwards.

2. The wheel according to claim 1, wherein said radially inner portion (3d'), radially outer portion (3d‴) and intermediate portion (3d'') extend substantially over the full width of the spoke web (3d) in the circumferential direction of the wheel.

## Patentansprüche

1. Rad (1) für Fahrzeuge, umfassend
eine Felge (2) aus Blech und
eine Scheibe (3) aus Blech, aufweisend einen Zentralteil (3a), der eingerichtet ist, mit einer Achsnabe verbunden zu werden, eine Mehrzahl von Speichen (3b), die sich von dem Zentralteil (3a) erstrecken, wobei jede Speiche (3b) ein Paar von Speichenrippen (3c) umfasst, die durch einen Speichensteg (3d) miteinander verbunden sind, und einen Umfangsverbindungsring (11), der sich konzentrisch mit einer Achse (z) des Rades (1) erstreckt und die äußeren Enden der Speichen (3b) miteinander verbindet, wobei der Verbindungsring (11) an einer radial inneren Oberfläche (2b) der Felge (2) befestigt wird, wobei Öffnungen (13) der Scheibe (3) zwischen dem Verbindungsring (11) und jeweiligen Paaren angrenzender Speichen (3b) definiert werden, wobei ein radial äußerer Rand (13a) der Öffnungen durch den Verbindungsring (11) definiert wird, wobei die Speichenrippen (3c) und der Speichensteg (3d) zwischen dem Zentralteil (3a) der Scheibe (3) und dem Verbindungsring (11) angeordnet sind,
wobei das Rad **dadurch gekennzeichnet ist, dass** der Speichensteg (3d) einen radial inneren Abschnitt (3d') und einen radial äußeren Abschnitt (3d‴) aufweisend eine geradlinige Kontur in dem Radialquerschnitt, sowie einen Zwischenabschnitt (3d") umfasst, der den radial inneren Abschnitt (3d') mit dem radial äußeren Abschnitt (3d‴) verbindet und aufweisend in dem Radialquerschnitt eine Kontur, die aus einem einzigen Kreisbogen gebildet wird und aufweisend eine Konkavität, die axial nach innen oder axial nach außen gerichtet ist.

2. Rad nach Anspruch 1, wobei sich der radial innere Abschnitt (3d'), der radial äußere Abschnitt (3d"') und der Zwischenabschnitt (3d") im Wesentlichen über die gesamte Breite des Speichenstegs (3d) in der Umfangsrichtung des Rades erstrecken.

## Revendications

1. Roue (1) pour véhicules, comprenant une jante (2) en tôle, et
un disque (3) en tôle, ayant une partie centrale (3a) adaptée à être connectée à un moyeu d'essieu, une pluralité de rayons (3b) s'étendant à partir de la partie centrale (3a), chaque rayon (3b) comprenant une paire de nervures de rayon (3c) interconnectées par une âme de rayon (3d), et un anneau de connexion périphérique (11) s'étendant concentriquement avec un axe (z) de la roue (1) et interconnectant les extrémités externes desdits rayons (3b), ledit anneau de connexion (11) étant fixé à une surface radialement interne (2b) de la jante (2), dans lequel des ouvertures (13) du disque (3) sont définies entre l'anneau de connexion (11) et des paires respectives de rayons adjacents (3b), un bord radialement externe (13a) desdites ouvertures étant défini par l'anneau de connexion (11), dans lequel lesdites nervures de rayon (3c) et ladite âme de rayon (3d) sont comprises entre ladite partie centrale (3a) du disque (3) et ledit anneau de connexion (11),
ladite roue étant **caractérisée en ce que** ladite âme de rayon (3d) comprend une portion radialement interne (3d') et une portion radialement externe (3d"') ayant un contour rectiligne en section radiale, et une portion intermédiaire (3d") reliant la portion radialement interne (3d') à la portion radialement externe (3d"') et ayant, en section radiale, un contour formé d'un seul arc circulaire et ayant une concavité orientée axialement vers l'intérieur ou axialement vers l'extérieur.

2. Roue selon la revendication 1, dans lequel ladite portion radialement interne (3d'), la portion radialement externe (3d‴) et la portion intermédiaire (3d") s'étendent sensiblement sur toute la largeur de l'âme de rayon (3d) dans la direction circonférentielle de la roue.
